# EUROPEAN PATENT SPECIFICATION

(11) **EP 4 321 016 B1**
(45) Date of publication and mention of the grant of the patent: **25.06.2025**
(21) Application number: 23185301.1
(22) Date of filing: 13.07.2023
(51) Int. Cl.: A01J 25/11

(54) **APPARATUS FOR DRAINING AND FORMING CURD, AND MODULE FOR INSTALLATION THEREIN**
VORRICHTUNG ZUM ABTROPFEN UND FORMEN VON KÄSEBRUCH UND MODUL ZUM EINBAU DARIN
APPAREIL D'ÉGOUTTAGE ET DE FORMAGE DE CAILLÉ ET MODULE DESTINÉ À ÊTRE INSTALLÉ EN SON SEIN

(30) Priority: 10.08.2022 EP 22189753
(43) Date of publication of application: 14.02.2024
(73) Proprietor: Tetra Laval Holdings & Finance S.A., 1009 Pully (CH)
(72) Inventor: SPIJKERMAN, Harrie, 8448GW Heerenveen (NL)
(74) Representative: Tetra Pak - Patent Attorneys SE

(56) References cited:
- WO-A1-2010/039033
- WO-A1-2010/041940

## Description

### Technical Field

The present disclosure relates to cheese production in general, and more particularly to draining and forming curd.

### Background

Manufacture of cheese starts with clotting of the milk, which may be achieved by adding rennet to the cheese milk or by acidification. The resulting gel is cut into pieces, which are processed for expulsion of whey, which is an aqueous solution of lactose, proteins and salts. The result is a mixture of curd grains and a large amount of whey. The whey and the curd grains are then separated and a coherent mass is formed from the drained curd. The coherent mass may then be pressed, salted and ripened, depending on type of cheese.

There are various technologies available for draining the whey from the mixture of whey and curd. One such technology is to use a continuous drainage tower, see WO2010/041940A1, in which the mixture is driven by gravity to slide along one or more vertical channels while being gradually drained of whey. In addition to removing whey from the mixture, the drained curd that is fed out from the tower may be formed into curd blocks, which may be placed in molds and transferred to a final processing station. The combination of draining and forming curd in one and the same equipment as well as the possibility to operate continuously have made continuous drainage towers a widely used equipment in cheese production, such as hard and semi-hard cheese production. One such example is the Tetra Pak^{®} Casomatic system marketed and sold by Tetra Pak.

The continuous drainage tower comes in different variants, typically in form of a fixed-structure tower or a variable-structure tower. The fixed-structure tower is configured to produce drained curd of a single, predefined shape. The variable-structure tower has a removable insert or module, which comprises one or more columns. The configuration of the insert is adaptable, in terms of the number, size and shape of the included columns. Thus, the variable-structure concept provides freedom to produce cheeses of different formats and varieties with one apparatus and enables efficient, high-capacity production of different cheeses on a relatively small surface area.

Even if the continuous drainage tower is well-known and established within the field of cheese production, there is room for improvement. One concern when using continuous drainage towers is the risk of microbial growth within the tower during operation. The enclosed space within the tower provides an environment which is rich in protein and sugar, where undesired microorganisms can thrive and grow.

### Summary

It is an objective to at least partly overcome one or more of the above-identified limitations of the prior art.

One such objective is to mitigate growth of microorganisms during production of drained curd in a continuous drainage tower.

One or more of these objectives, as well as further objectives that may appear from the description below, are at least partly achieved by an apparatus for draining and forming curd, and a module for installation in the apparatus according to the independent claims, embodiments thereof being defined by the dependent claims.

According to a first aspect an apparatus for draining and forming curd is provided according to claim 1. The first aspect is based on the insight that microbial growth will be mitigated if the average residence time of the drained whey within the apparatus is reduced. The apparatus of the first aspect implements a simple yet effective design principle for reducing the residence time of whey, according to which a lower drainage chamber is configured with a smaller whey-containing volume than an upper drainage chamber in the apparatus. In the apparatus, the amount of whey in the mixture inside the column is reduced as it flows downwards through the column. Thereby, the flow rate of whey from the column into the drainage chambers becomes smaller downwards along the column. For equally-sized drainage chambers, a smaller flow rate results in an increased average residence time of the drained whey. It is thus realized that the above-mentioned design principle provides a technique of mitigating microbial growth by counteracting excessive whey residence times in the lower drainage chamber.

According to a second aspect a module according to claim 18 is provided for installation into the casing of the apparatus according to the first aspect. The module offers the same advantages as the apparatus according to the first aspect.

Still other objectives, features, aspects and advantages of the invention will appear from the following detailed description as well as from the accompanying schematic drawings.

### Drawings

FIG. 1 is a side view of a conventional apparatus for draining and forming curd.
FIG. 2 is a perspective view of a multi-column module installed in an apparatus as shown in FIG. 1.
FIGS 3A-3B are side views of modules configured in accordance with embodiments of the invention.
FIG. 4A is a side view of a drainage chamber in a conventional apparatus, and FIG. 4B is a side view of a drainage chamber in an apparatus in accordance with an embodiment of the invention.
FIG. 5 is a side view of an apparatus in accordance with an embodiment of the invention.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

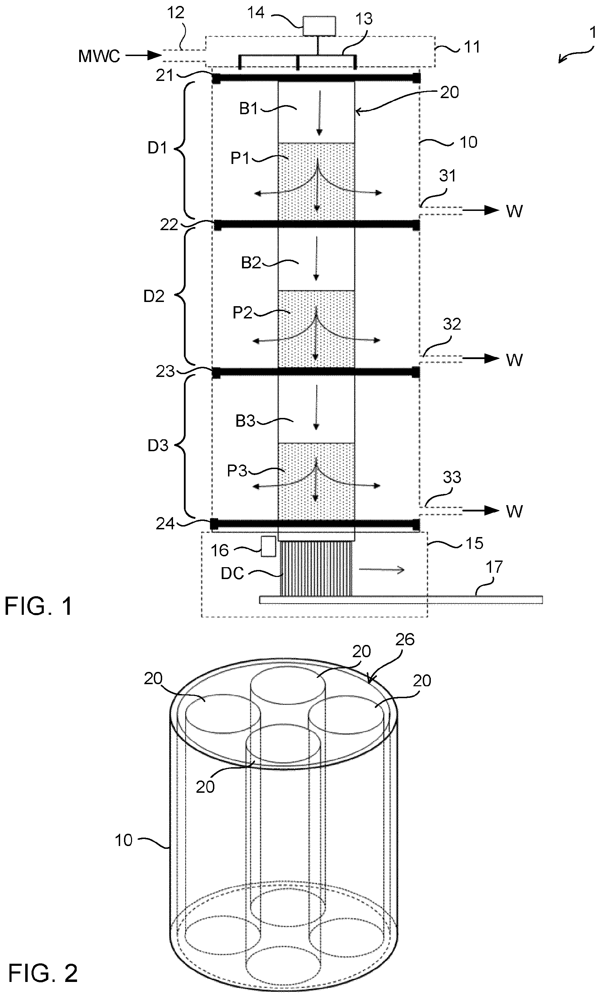

FIG. 1 is a side view of the internal structure of an apparatus 1 for draining and forming curd, which is configured in accordance with conventional practice. The apparatus 1 is an implementation of the continuous drainage tower with variable internal structure as described in the Background section. The apparatus 1 comprises a vertically arranged casing 10 (dashed lines). On top of the vertical casing 10, there is a distribution arrangement 11 (dashed lines), which comprises one or more inlet pipes 12 (one shown), which are arranged to receive a mixture of whey and curd, designated by MWC in FIG. 1. The distribution arrangement 11 is configured to distribute the incoming MWC within the casing 10. In the illustrated example, the distribution arrangement 10 includes a mechanical stirring device 13, which is driven to rotate by an electrical motor 14. The casing 10 encloses one or more vertical columns or tubes 20 (one shown), which are arranged to receive the MWC from the distribution arrangement 11. Once received, the MWC is driven by gravity to flow downwards through the respective column 20, as indicated by arrows. Further, as also indicated by arrows, whey W is drained from the MWC when the MWC passes perforated sections of the column 20. In FIG. 1, the perforated sections are represented as dotted areas and are enumerated P1-P3 from top to bottom. To achieve a permeability to whey, the respective perforated section P1-P3 defines a large number of perforations or holes. To achieve a uniform extraction of whey from the column 20, the respective perforated section P1-P3 suitably extends circumferentially around the column 20. At the bottom of the column 20, the MWC has been transformed into drained curd DC. A receiving arrangement or "base unit" 15 (dashed lines) is disposed beneath the casing 10 to receive the drained curd DC. The base unit 15 may include one or more dosing devices 16 (one shown) for cutting the drained curd into curd blocks of a given size or weight, and a transportation device 17 for conveying the curd blocks for downstream processing, for example placing the curd blocks in molds, pressing, brining, ripening, etc.

The internal structure of the apparatus 1 comprises two or more drainage chambers, which are arranged in sequence in the vertical direction V of the casing 20. In FIG. 1, the apparatus comprises three drainage chambers, which are enumerated D1-D3 from top to bottom. The respective drainage chamber D1-D3 forms a continuous space and is defined between the casing 10 and the column(s) 20. In the conventional apparatus 1, as shown, all drainage chambers D1-D3 are configured to have the same volume. In practice, the volumes may differ slightly, within ±10%, as a result of manufacturing and mounting tolerances. In the context of the present disclosure, drainage chambers with such variations in volumes are considered to be identical. The respective drainage chamber D1-D3 comprises one or more outlet pipes (one shown) 31, 32, 33, which are used for removing drained whey W from the respective drainage chamber D1-D3, as indicated by arrows.

As shown in FIG. 1, the column 20 comprises or defines an alternating arrangement of non-perforated sections B1-B3 and perforated sections P1-P3. The non-perforated sections B1-B3 are non-permeable to liquid and are referred to as "blind sections" in the following. The blind sections B1-B3 are provided to slow down the flow of MWC through the column, by increasing the friction between the column 20 and the MWC. By slowing down the flow, an inherent compacting of the MWC is achieved to cause controlled released of whey from the MWC through the respective perforated section P1-P3. The alternating arrangement of sections starts with a blind section B1 at the top of the column 20 to allow the incoming flow of MWC to stabilize before reaching the first perforated section P1 and thereby avoid that curd in the MWC blocks the perforations of the perforated section P1. Further, the alternating arrangement of sections ends with a perforated section P3 at the bottom of the column 20.

The internal structure of the apparatus 1 comprises a plurality of plates 21-24 of solid material, which are arranged to define the vertical extent of the drainage chambers D1-D3. In the following, the plates are denoted "dividers". The respective column 20 extends through and is sealingly attached to the dividers 21-24. The dividers 21-24 are further arranged in sealing engagement with the casing 20 at their perimeter, for example by one or more gaskets. Thereby, the drainage chambers D1-D3 are sealed from each other by the dividers 21-24.

Although not shown in FIG. 1, a whey extraction manifold is conventionally connected to the outlet pipes 31-33 to receive the drained whey W. As understood from the foregoing, whey is released from the MWC due to a pressure formed in the column 20 by gravity pushing the MWC downwards while friction against the column 20 operates in the opposite direction. The pressure in the drainage chambers D1-D3 may also be controlled for obtaining a desired drainage of whey. For example, pressure may be increased or decreased in a drainage chamber D1-D3 to reduce and increase, respectively, the drainage of whey from the MWC via the perforated section P1-P3. During operation of the apparatus, the flow of whey W through the respective outlet pipe 31-33 is controlled so that the drainage chambers D1-D3 are full of whey, or at least full to levels where the perforated sections P1-P3 are surrounded by whey.

FIG. 2 is a perspective view of a module or insert 26 as mounted in the casing 10 of an apparatus 1 as depicted in FIG. 1. The module 26 is removably inserted into the casing 20 and defines a holding structure (not shown) for one or more columns 20 (here, four columns). Although not shown in FIG. 2, the dividers 21-24 are included in the module 26 and are attached to the columns 20 by analogy with FIG. 1, to define a sequence of chambers, which are sealed by the casing wall when the module 20 is mounted inside the casing 20. As shown in FIG. 2, the module 26 is configured to spatially separate the vertical columns 20 to allow whey to flow out from the MWC through the perforated sections (not shown) and accumulate in the drainage chambers. The columns 20 in the module 26 may or may not be identical and may have any cross-sectional size and shape. The columns 20 have the same vertical arrangement of perforated and blind sections, which are aligned between the columns 20.

As mentioned in the Background section, microbial growth is a major concern in this type of apparatus. The MWC contains nutrients and water that are consumed by microorganisms and typically has a pH and temperature that allow microorganisms to multiply in numbers. For example, it is not uncommon that the conditions in the apparatus 1 allows microorganisms to double in number within approximately 20 minutes. The microorganisms may enter via the MWC or be present in the apparatus 1 when the MWC is introduced for processing. For example, the MWC may include thermoresistant microorganisms that survive pasteurization. If microorganisms, irrespective of origin, are allowed to multiply during processing of the MWC in the apparatus 1, the end product may become unsafe, injurious to health or generally unfit for human consumption. It is therefore vital to limit microbial growth in an apparatus for draining and forming curd.

The Applicant has found that microbial growth may be mitigated by reducing the residence time of the drained whey within the apparatus, and specifically to make it small relative to the growth rate of the population of microorganisms in the apparatus. In some embodiments, the residence time of whey is at least partly reduced by applying a novel design principle for the vertical sequence of drainage chambers within the apparatus. According to this design principle, a lower drainage chamber is configured to have smaller whey-containing volume than an upper drainage chamber in the respective column of the apparatus. In this context, the upper drainage chamber is located above the lower drainage chamber in the vertical sequence of drainage chambers. This design principle may be applied to one or more pairs of drainage chambers within a column, or to all pairs of drainage chambers within a column. A pair of drainage chambers may but need not be adjacent to one another in the column. In the context of the present disclosure, one drainage chamber is considered to be smaller than another drainage chamber when their volumes differ by more than 10%, i.e., when the difference exceeds possible effects of manufacturing and mounting tolerances as noted above. In some embodiments, the difference between the volumes of the higher and lower drainage chambers is at least 25%. The design principle is based on the insight that the amount of whey in the MWC is reduced as the MWC flows down through the column, causing the flow rate of whey into the respective drainage chamber through its perforated section to be smaller in a lower drainage section than in an upper drainage section. Since the drainage chambers are filled with whey during operation of the apparatus, the average residence time of the drained whey within a drainage chamber scales with the whey-containing volume of the drainage chamber.

In the following description, it is presumed that a drainage chamber comprises at least part of a perforated section of at least one column. A drainage chamber may also, but need not, comprise one or more blind sections of the at least one column. In this context, a drainage chamber is considered to "comprise" a perforated/blind section when the drainage chamber borders to, and thereby encloses, such a section of a column.

Different volumes of drainage chambers in the apparatus may be achieved in different ways. In the examples described hereinbelow, the vertical extent (height) of one or more drainage chambers is adjusted to achieve a desired difference in volume between drainage chambers. A modification of the height is simple to implement in practice. If only height is modified to adjust the volume of a drainage chamber, little or no modification needs to be made to the casing to accommodate a modified drainage chamber. Further, as will be seen in the following examples, it is even possible to use the same column as in the conventional apparatus and adjust the vertical arrangement of the dividers in accordance with the design principle while ensuring that each drainage chamber comprises at least part of at least one perforated section in the column. Alternatively or additionally, the horizontal extent (width) of one or more drainage chambers may be adjusted. However, such an adjustment involves a more extensive modification of the apparatus including its casing and needs to be implemented to allow insertion/retraction of the module (26 in FIG. 2) into the casing.

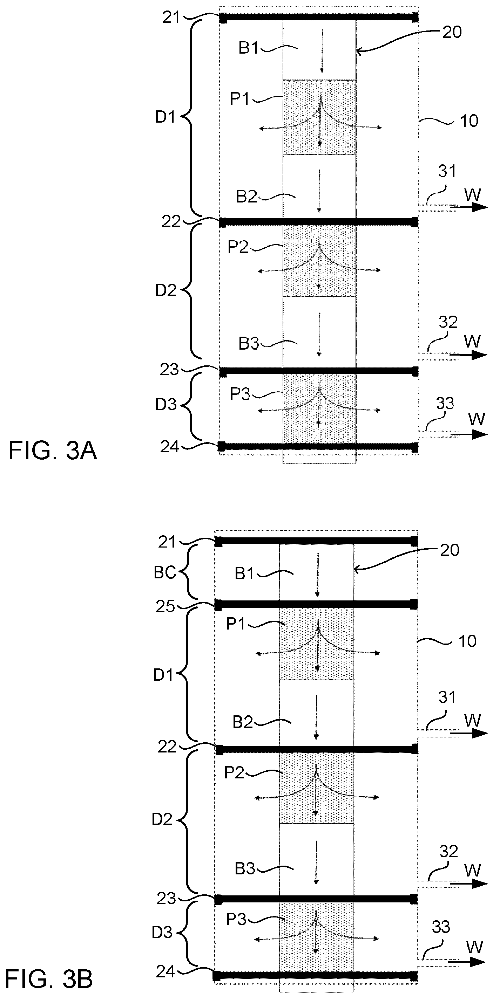

In the following, two embodiments of the internal structure of an apparatus for draining and forming curd will be described with reference to FIGS 3A-3B. Although not shown in FIGS 3A-3B, the internal structure is defined by a module (cf. 26 in FIG 2) which is removably inserted into the casing and defines a fixed arrangement of one or more columns and a plurality of dividers. In the illustrated embodiments, the internal structure includes a single column 20 of the same design as in FIG. 1. The column 20 comprises an alternating arrangement of three blind sections and three perforated sections, starting with a blind section at the top of the column 20. Like in FIG. 1, the blind sections are designated by B1-B3, and the perforated sections are designated by P1-P3, both enumerated from top to bottom along the column 20. The configuration of the column 20 in FIGS 3A-3B is merely given by way of example and to facilitate comparison with FIG. 1.

FIG. 3A is a side view of an internal structure of an apparatus in accordance with a first embodiment. The internal structure defines three drainage chambers D1-D3 in relation to the surrounding casing 10. The above-described design principle is implemented for all drainage chambers D1-D3. Thus, D2 is smaller than D1, and D3 is smaller than D2. The drainage chambers have equal widths and different heights to achieve desired differences in volume. Compared to the internal structure in FIG. 1, the divider 22 has been moved downwards to separate blind section B2 from perforated section P2, and the divider 23 has been moved downwards to separate blind section B3 from perforated section P3. Thereby, the top-most drainage chamber D1 comprises two blind sections B1, B2 separated by a perforated section P1. The middle drainage chamber D2 comprises a perforated section P2 and an adjacent blind section B3, and the lowest drainage chamber D3 comprises a perforated section P3 and no blind section. Like in FIG. 1, the respective divider 21-24 is brought into sealing engagement with the inside of the casing 10. For example, one or more seals may be arranged on the perimeter of the respective divider 21-24 to sealingly engage the casing 10 when the module is inserted into the casing 10.

In the example of FIG. 3A, the casing 10 has been modified to relocate the outlet pipes 31, 32 to the bottom of the respective drainage section D1, D2. By arranging the outlet pipes 31-33 at the bottom of the drainage chambers D1-D3, the formation of dead zones ("stagnant zones") inside the drainage chambers is mitigated. As used herein, a dead zone designates a local fluid-containing region in which fluid (whey) is replaced very slowly or not at all. The presence of a dead zone results in a pocket of fluid with a long residence time within the apparatus, potentially allowing uncontrolled microbial growth.

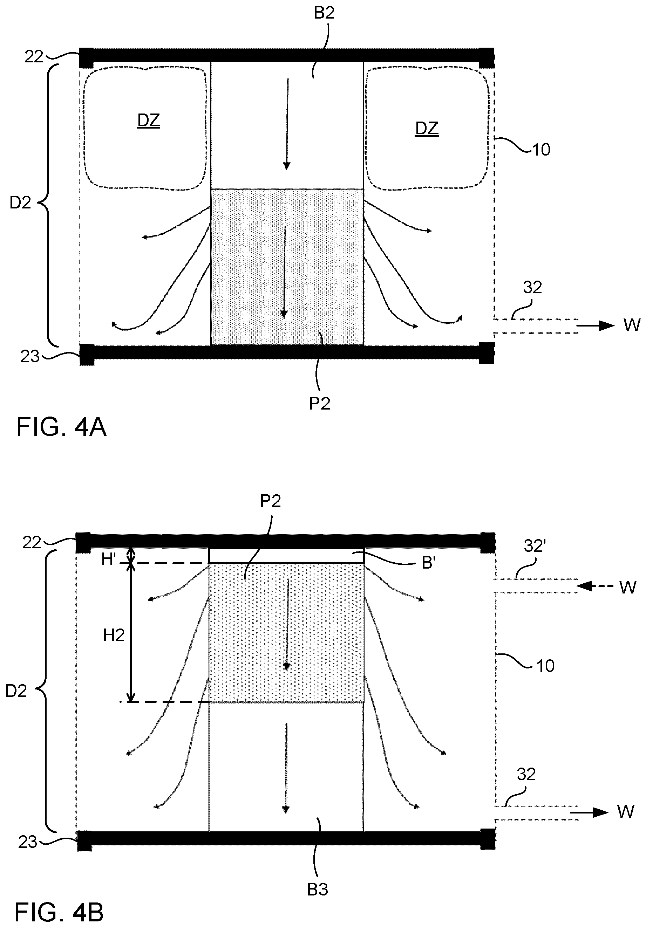

In the example of FIG. 3A, the dividers 22, 23 are placed in vertical alignment with a respective border between blind and perforated sections. Such a placement may be advantageous, for reasons discussed below with reference to FIGS 4A-4B, but is not necessary for the purpose of reducing the average residence time of whey within a drainage chamber.

By comparing FIG. 3A to FIG. 1, it is realized that the internal structure in FIG. 3A will significantly reduce the residence time of the lowest drainage chamber D3, maintain approximately the same residence time of the middle drainage chamber D2, and increase the residence time of the top-most drainage chamber D1. The increased residence time of D1 is less of a concern since the flow rate of whey into D1 is relatively high and the risk for microbial growth is limited.

FIG. 3B is a side view of an internal structure of an apparatus in accordance with a second embodiment. The middle and lowest drainage chambers D2, D3 are identical to the first embodiment and will not be described further. The above-described design principle is implemented for the lowest drainage chamber D3, which is smaller than both D1 and D2, which have approximately the same volume. Compared to the first embodiment, the enlargement of the top-most drainage chamber D1 is avoided by including an additional divider 25, which is installed to define a "blind chamber" BC on top of the drainage chambers D1-D3. The blind chamber BC comprises the top-most blind section B1 and lacks perforated section and is thus a "non-drainage chamber". Thus, the blind section BC will not receive whey from the column 20. By the blind section BC, the volume of the top-most drainage chamber D1 is reduced compared to the first embodiment in FIG. 3A, to further reduce the risk of microbial growth. In the illustrated example, D1 comprises a perforated section P1 and an adjacent blind section B2. Further, the friction-enhancing function of the top-most blind section B1 is retained within the apparatus. As noted with respect to the first embodiment, dividers need not be exactly vertically aligned with borders between sections. For example, the additional divider 25 may be arranged above the border between B1 and P1.

As noted, the placement of the respective divider may be relevant for other purposes than defining the volume of the respective drainage chamber. It has been found that the placement of the dividers may also have an impact of the formation of dead zones within the drainage chambers. This is illustrated in FIGS 4A-4B, of which FIG. 4A is a side view of the internal structure of the middle drainage chamber D2 in the conventional apparatus of FIG. 1, and FIG. 4B is a side view of the corresponding drainage chamber D2 in the first and second embodiments of FIGS 3A-3B. In FIG. 4A, as shown by arrows, whey is driven through the perforated section P2 and flows sideways and downwards into the drainage chamber D2. Little or no flow of whey will be directed into the top portion of the drainage chamber D2, causing formation of a dead zone DZ at the upper divider 22 and alongside the blind section B2.

In FIG. 4B, the perforated section P2 is located above the blind section B3. Thereby, as indicated by arrows, whey is driven through the perforated section P2 at the top of the drainage chamber D2 and flows sideways and downwards into the drainage chamber D2. It is realized that dead zone formation is mitigated by arranging a perforated section above a blind section in the drainage chamber, and in particular by arranging a perforated section adjacent to the divider that defines the top of the drainage chamber (cf. 22 in FIG. 4B). As shown in FIG. 4B, the perforated section P2 may be separated from the divider 22 at the top of the drainage chamber D2 by a small intermediate blind portion B'. The blind portion B' may be part of a blind section of the column 20, if the divider 22 is offset from the border between P2 and B2 (cf. FIGS 3A-3B). Alternatively, the blind portion B' may be formed by a flange which is formed on the divider 22 and used for attaching the divider 22 to the column 20. As used herein, a perforated section is considered to be "adjacent to" the top of a drainage chamber even in the presence of an intermediate blind portion B', provided that the height H' of the blind portion B' is less than 15% of the height H2 of the perforated section P2.

In some embodiments, as exemplified in FIGS 3A-3B, the lowest drainage chamber D3 is free of blind sections. This is made both to achieve a small volume and to mitigate dead zone formation. A drainage chamber is considered to be free of blind sections if the total height of blind section(s) and blind portion(s), if present, is less than 15% of the total height of the drainage chamber. The total height of blind section(s) and blind portion(s) within a drainage chamber is also denoted "total non-perforated height" herein.

In some embodiments, for drainage chambers that include a blind section, the height of the blind section is at least 25% of the height of the perforated section that is located above and next to the blind section. It is currently believed that this height relation ensures both proper movement of the MWC down through the column and proper extraction of whey through the perforated section into the drainage chamber. Consequently, in the examples of FIGS 3A-3B, the height of B2 is at least 25% of the height of P1, and the height of B3 is at least 25% of the height of P2.

In some embodiments, as exemplified for drainage chambers D1, D2 in FIGS 3A-3B, a blind section is located adjacent to the divider that defines the bottom of the drainage chamber. This enables the height of the perforated section, which is located above the blind section, to be maximized for a given vertical height of the drainage chamber.

Generally, a drainage chamber may comprise any number of perforated sections and blind sections. It is currently believed that the total non-perforated height of drainage chambers other than the lowest drainage chamber should be at least 25% of the total height of the drainage chamber.

It may be noted that dead zone formation is also mitigated in the top-most drainage chamber D1 of the second embodiment (FIG. 3B), whereas such a mitigation is not achieved in the top-most drainage chamber D1 of the first embodiment (FIG. 3A). However, due to the larger inflow of whey in the top-most drainage chamber D1, the risk for dead zone formation is lower than in the drainage chambers D2, D3 and may be tolerated.

The risk for dead zone formation may be further mitigated by circulating whey through the respective drainage chamber. An example of such circulation is shown in FIG. 4B for drainage chamber D2. Here, as indicated by a dashed arrow, a portion of the whey W that is removed from the drainage chamber D2 through the outlet pipe(s) 32 is reintroduced or "recirculated" via one or more recirculation inlet pipe(s) 32' (one shown) attached to the casing 10. The respective recirculation inlet pipe 32' may be arranged at the top of the drainage chamber D2 to maximize the distance to the outlet pipe(s) 32.

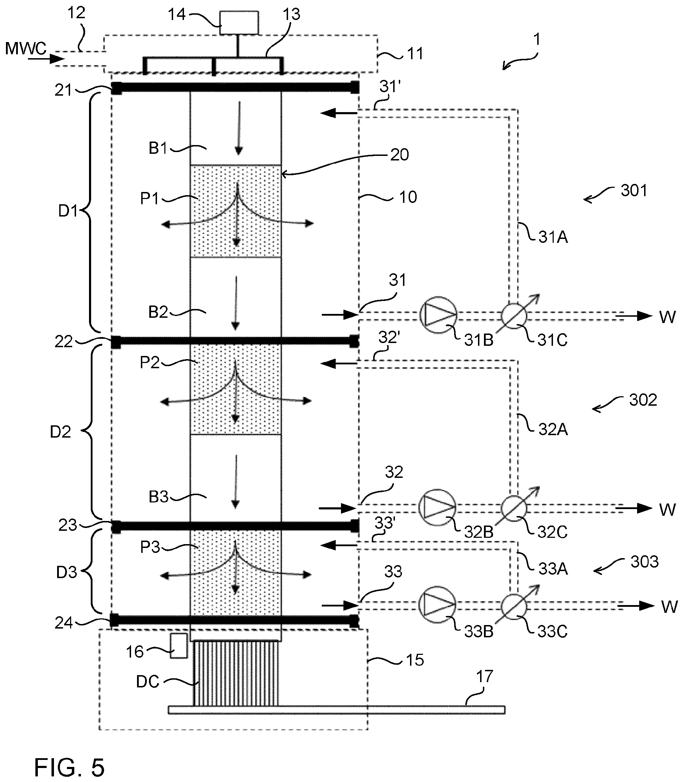

It has been found beneficial to separate the recirculation of whey between the drainage chambers, so that whey is only recirculated within the respective drainage chamber and not between the drainage chambers. This will avoid distributing microorganisms between the drainage chambers. In some embodiments, to reduce cost of recirculation equipment, a plurality of drainage chambers may be fluidly connected to a common fluid distribution manifold, in which one of more fluid pumps and valves are operated to recirculate whey through the respective drainage chamber. However, this may potentially cause microorganisms to be distributed between the drainage chambers since whey from different drainage chambers are present in the common manifold. In some embodiments, the apparatus instead comprises fluidly separated recirculation arrangements, one for each drainage chamber, with each recirculation arrangement having a dedicated recirculation pump. FIG. 5 is side view of such an apparatus 1, which comprises the internal structure of FIG. 3A. The apparatus 1 in FIG. 5 comprises three recirculation arrangements 301, 302, 303. The recirculation arrangement 301 is fluidly connected to the top-most drainage chamber D1 and comprises a recirculation pipe 31A, which is configured to fluidly connect an outlet pipe 31 to a recirculation inlet pipe 31', a recirculation pump 31B arranged in the outlet pipe 31 to draw whey from the drainage chamber D1, and a flow controller 31C for setting the fraction of the outgoing whey that is redirected into pipe 31A. The flow controller 31C may, for example comprise one or more valves. The recirculation arrangements 302, 303 are configured and operated in correspondence with the recirculation arrangement 301 and comprises a recirculation pipe 32A, 33A between an outlet pipe 32, 33 and a recirculation inlet pipe 32', 33', a recirculation pump 32B, 33B, and a flow controller 32C, 33C. The respective recirculation arrangement 301, 302, 303 may be operated by a control device (not shown) for the apparatus 1.

It is to be understood that the internal structures in FIGS 3-5 may be defined by a module 26 for insertion into the casing 10, as shown in FIG. 2. The module 26 may include any number of columns 20 with any number of blind and perforated sections. The respective column 20 may have a cross-section of any shape, for example circular (as in FIG. 2), elliptical or rectangular. The casing 10 may be generally cylindrical and may have a cross-section of any shape, for example circular (as in FIG. 2), elliptical or rectangular.

As understood from the examples in FIGS 3A-3B, the height of the respective drainage chamber may be adjusted by re-arranging one or more dividers, and/or by adding one or more dividers in relation to a predefined column with an alternating arrangement of blind and perforated sections. Alternatively or additionally, the height of the respective drainage chamber may be adjusted by re-designing the column. The height of the blind sections may be fixed (non-adjustable) to maintain a required friction to the MWC, but the height of one or more perforated sections may be adjustable. For example, the height of the lowest drainage chamber D3 in FIGS 3A-3B may be reduced by reducing the height of the lowest perforated section P3 in the column 20. The total drainage capacity (permeability) of P3 will be reduced in proportion to the height reduction. This may be an undesirable effect, which may be counteracted by increasing the number of perforations per unit surface area of P3 and/or by increasing the area of the individual perforations in P3, to achieve a desired permeability of the lowest drainage chamber D3.

The different parts and components of the apparatus 1 are per se manufactured and assembled by using techniques and materials, such as stainless steel, which are commonly used within the field of cheese production.

## Claims

1. An apparatus for draining and forming curd, said apparatus comprising:
a casing (10) arranged in a vertical direction (V),
a module (26) which is removably inserted into the casing (10) and comprises a column (20) arranged to extend in the vertical direction (V),
a distribution arrangement (11) arranged above the module (26) to distribute a mixture of curd and whey into the column (20), and
a base unit (15) arranged beneath the module (26) to receive drained curd from the column (20),
wherein the column (20) comprises non-perforated sections (B1-B3) and perforated sections (P1-P3), which alternate in the vertical direction (V) of the column (20), said module (26) further comprising a plurality of horizontal dividers (21-25), which are arranged to define a vertical sequence of drainage chambers (D1-D3) inside the casing (10), each of the drainage chambers (D1-D3) being configured for receiving whey from the mixture in the column (20) through at least one perforated section (P1-P3) of the column (20), and
wherein the vertical sequence of drainage chambers (D1-D3) comprises a lower drainage chamber (D2; D3), which is arranged beneath an upper drainage chamber (D1; D2), **characterized in that**
the interior volume of the lower drainage chamber (D2; D3) is smaller than the interior volume of the upper drainage chamber (D1; D2).

2. The apparatus of claim 1, wherein the interior volume of the lower drainage chamber (D2; D3) is at least 25% smaller than the interior volume of the upper drainage chamber (D1; D2).

3. The apparatus of claim 1 or 2, wherein
the lower drainage chamber (D2; D3) comprises a perforated section (P2; P3) of the column (20), and
the upper drainage chamber (D1; D2) comprises a non-perforated section (B2; B3) and a further perforated section (P1; P2) of the column (20).

4. The apparatus of claim 3, wherein, in the upper drainage chamber (D1; D2), the non-perforated section (B2; B3) is arranged beneath the further perforated section (P1; P2).

5. The apparatus of claim 4, wherein the non-perforated section (B2; B3) in the upper drainage chamber (D1; D2) is arranged at a bottom of the upper drainage chamber (D1; D2), adjacent to one of the horizontal dividers (21-25).

6. The apparatus of any one of claims 3-5, wherein a vertical height of the non-perforated section (B2; B3) in the upper drainage chamber (D1; D2) is at least 25% of a vertical height of the further perforated section (P1; P2) in the upper drainage chamber (D1; D2).

7. The apparatus of any one of claims 3-6, wherein the further perforated section (P1; P2) in the upper drainage chamber (D1; D2) is located at a top of the upper drainage chamber (D1; D2), adjacent to one of the horizontal dividers (21-25).

8. The apparatus of any one of claims 3-6, wherein the upper drainage chamber (D1) comprises a further non-perforated section (B1) of the column (20), wherein the further non-perforated section (B1) in the upper drainage chamber (D1; D2) is arranged above the further perforated section (P1) within the upper drainage chamber (D1).

9. The apparatus of any one of claims 1-7, wherein said plurality of horizontal dividers (21-25) define a non-drainage chamber (BC), which comprises a further non-perforated portion (B1) of the column (20) and is arranged above the vertical sequence of drainage chambers (D1-D3).

10. The apparatus of any preceding claim, wherein the upper drainage chamber (D1) is located at a top of the vertical sequence of drainage chambers (D1-D3).

11. The apparatus of any one of claims 1-7 or 9, wherein the upper drainage chamber (D2) is located intermediate a top drainage chamber (D1) and the lower drainage chamber (D3).

12. The apparatus of any preceding claim, wherein the column (20) has, within the upper drainage chamber (D1; D2), a total non-perforated height in the vertical direction (V) that is at least 25% of a vertical height of the upper drainage chamber (D1; D2).

13. The apparatus of any preceding claim, wherein the lower drainage chamber (D2; D3) is located at a lower end of the vertical sequence of drainage chambers (D1-D3), adjacent to the base unit (15).

14. The apparatus of claim 13, wherein the column (20) has, within the lower drainage chamber (D2; D3), a total non-perforated height in the vertical direction (V) that is less than 15% of the vertical height of the lower drainage chamber (D2; D3).

15. The apparatus of any preceding claim, further comprising a respective whey recirculation arrangement (301-303) which is fluidly connected to a respective drainage chamber in the vertical sequence of drainage chambers (D1-D3) and is operable to recirculate whey from an outlet (31-33) of the respective drainage chamber (D1-D3) back to a recirculation inlet (31'-33') of the respective drainage chamber (D1-D3).

16. The apparatus of any preceding claim, wherein the lower drainage chamber (D2; D3) has a smaller vertical height than the upper drainage chamber (D1; D2).

17. The apparatus of any preceding claim, wherein each of the perforated sections (P1-P3) extends circumferentially around the column (20).

18. A module for installation into the casing (10) of the apparatus according to any one of claims 1-17, said module comprising:
a column (20), which is arranged to extend in a vertical direction (V) and comprises non-perforated sections (B1-B3) and perforated sections (P1-P3), which alternate in the vertical direction (V) of the column (20), and
a plurality of horizontal dividers (21-25), which are arranged to define a vertical sequence of drainage chambers (D1-D3) inside the casing (10), each of the drainage chambers (D1-D3) being configured for receiving whey from a mixture of curd and whey in the column (20) through at least one perforated section (P1-P3) of the column (20),
wherein the vertical sequence of drainage chambers (D1-D3) comprises a lower drainage chamber (D2; D3), which is arranged beneath an upper drainage chamber (D1; D2), **characterized in that**
the interior volume of the lower drainage chamber (D2; D3) is smaller than the interior volume of the upper drainage chamber (D1; D2).

## Patentansprüche

1. Vorrichtung zum Abtropfen und Bilden von Käsebruch, wobei die Vorrichtung Folgendes umfasst:
ein Gehäuse (10), das in einer vertikalen Richtung (V) angeordnet ist,
ein Modul (26), das herausnehmbar in das Gehäuse (10) eingesetzt ist und eine Säule (20) umfasst, die so ausgelegt ist, dass sie sich in der vertikalen Richtung (V) erstreckt,
eine Verteilungsanordnung (11), die oberhalb des Moduls (26) angeordnet ist, um eine Mischung aus Käsebruch und Molke in die Säule (20) einzuleiten, und
eine Basiseinheit (15), die unterhalb des Moduls (26) angeordnet ist, um abgetropften Käsebruch aus der Säule (20) aufzunehmen,
wobei die Säule (20) nicht-perforierte Abschnitte (B1-B3) und perforierte Abschnitte (P1-P3) umfasst, die sich in der vertikalen Richtung (V) der Säule (20) abwechseln, wobei das Modul (26) ferner eine Vielzahl von horizontalen Trennwänden (21-25) umfasst, die so angeordnet sind, dass sie eine vertikale Abfolge von Abtropfkammern (D1-D3) innerhalb des Gehäuses (10) definieren, wobei jede der Abtropfkammern (D1-D3) dazu ausgelegt ist, Molke aus der Mischung in der Säule (20) durch mindestens einen perforierten Abschnitt (P1-P3) der Säule (20) aufzunehmen,
und wobei die vertikale Abfolge von Abtropfkammern (D1-D3) eine untere Abtropfkammer (D2; D3) umfasst, die unterhalb einer oberen Abtropfkammer (D1; D2) angeordnet ist, **dadurch gekennzeichnet, dass** das Innenvolumen der unteren Abtropfkammer (D2; D3) kleiner als das Innenvolumen der oberen Abtropfkammer (D1; D2) ist.

2. Vorrichtung nach Anspruch 1, wobei das Innenvolumen der unteren Abtropfkammer (D2; D3) mindestens 25 % kleiner als das Innenvolumen der oberen Abtropfkammer (D1; D2) ist.

3. Vorrichtung nach Anspruch 1 oder 2, wobei
die untere Abtropfkammer (D2; D3) einen perforierten Abschnitt (P2; P3) der Säule (20) umfasst, und
die obere Abtropfkammer (D1; D2) einen nicht-perforierten Abschnitt (B2; B3) und einen weiteren perforierten Abschnitt (P1; P2) der Säule (20) umfasst.

4. Vorrichtung nach Anspruch 3, wobei in der oberen Abtropfkammer (D1; D2) der nicht-perforierte Abschnitt (B2; B3) unterhalb des weiteren perforierten Abschnitts (P1; P2) angeordnet ist.

5. Vorrichtung nach Anspruch 4, wobei der nicht-perforierte Abschnitt (B2; B3) in der oberen Abtropfkammer (D1; D2) an einem Boden der oberen Abtropfkammer (D1; D2), angrenzend an eine der horizontalen Trennwände (21-25), angeordnet ist.

6. Vorrichtung nach einem der Ansprüche 3-5, wobei die vertikale Höhe des nicht-perforierten Abschnitts (B2; B3) in der oberen Abtropfkammer (D1; D2) mindestens 25 % der vertikalen Höhe des weiteren perforierten Abschnitts (P1; P2) in der oberen Abtropfkammer (D1; D2) beträgt.

7. Vorrichtung nach einem der Ansprüche 3-6, wobei der weitere perforierte Abschnitt (P1; P2) in der oberen Abtropfkammer (D1; D2) an einem oberen Ende der oberen Abtropfkammer (D1; D2), angrenzend an eine der horizontalen Trennwände (21-25), angeordnet ist.

8. Vorrichtung nach einem der Ansprüche 3-6, wobei die obere Abtropfkammer (D1) einen weiteren nicht-perforierten Abschnitt (B1) der Säule (20) umfasst, wobei der weitere nicht-perforierte Abschnitt (B1) in der oberen Abtropfkammer (D1; D2) oberhalb des weiteren perforierten Abschnitts (P1) innerhalb der oberen Abtropfkammer (D1) angeordnet ist.

9. Vorrichtung nach einem der Ansprüche 1-7, wobei die Vielzahl von horizontalen Trennwänden (21-25) eine Nicht-Abtropfkammer (BC) definieren, die einen weiteren nicht-perforierten Abschnitt (B1) der Säule (20) umfasst und oberhalb der vertikalen Abfolge von Abtropfkammern (D1-D3) angeordnet ist.

10. Vorrichtung nach einem der vorhergehenden Ansprüche, wobei die obere Abtropfkammer (D1) an einem oberen Ende der vertikalen Abfolge von Abtropfkammern (D1-D3) angeordnet ist.

11. Vorrichtung nach einem der Ansprüche 1-7 oder 9, wobei die obere Abtropfkammer (D2) zwischen einer oberen Abtropfkammer (D1) und der unteren Abtropfkammer (D3) angeordnet ist.

12. Vorrichtung nach einem der vorhergehenden Ansprüche, wobei die Säule (20) innerhalb der oberen Abtropfkammer (D1; D2) eine gesamte nicht-perforierte Höhe in vertikaler Richtung (V) aufweist, die mindestens 25 % der vertikalen Höhe der oberen Abtropfkammer (D1; D2) beträgt.

13. Vorrichtung nach einem der vorhergehenden Ansprüche, wobei die untere Abtropfkammer (D2; D3) an einem unteren Ende der vertikalen Abfolge von Abtropfkammern (D1-D3), angrenzend an die Basiseinheit (15), angeordnet ist.

14. Vorrichtung nach Anspruch 13, wobei die Säule (20) innerhalb der unteren Abtropfkammer (D2; D3) eine gesamte nicht-perforierte Höhe in vertikaler Richtung (V) aufweist, die weniger als 15 % der vertikalen Höhe der unteren Abtropfkammer (D2; D3) beträgt.

15. Vorrichtung nach einem der vorhergehenden Ansprüche, ferner umfassend eine jeweilige Molkerückführungsanordnung (301-303), die fluidisch mit einer jeweiligen Abtropfkammer in der vertikalen Abfolge von Abtropfkammern (D1-D3) verbunden und betriebsfähig ist, Molke von einem Auslass (31-33) der jeweiligen Abtropfkammer (D1-D3) zurück zu einem Rückführungseinlass (31'-33') der jeweiligen Abtropfkammer (D1-D3) zu recyceln.

16. Vorrichtung nach einem der vorhergehenden Ansprüche, wobei die untere Abtropfkammer (D2; D3) eine kleinere vertikale Höhe als die obere Abtropfkammer (D1; D2) aufweist.

17. Vorrichtung nach einem der vorhergehenden Ansprüche, wobei sich jeder der perforierten Abschnitte (P1-P3) umfangsmäßig um die Säule (20) erstreckt.

18. Modul zum Einbau in das Gehäuse (10) der Vorrichtung nach einem der Ansprüche 1-17, wobei das Modul Folgendes umfasst:
eine Säule (20), die so ausgelegt ist, dass sie sich in einer vertikalen Richtung (V) erstreckt und nicht-perforierte Abschnitte (B1-B3) sowie perforierte Abschnitte (P1-P3) umfasst, die sich in vertikaler Richtung (V) der Säule (20) abwechseln, und
eine Vielzahl von horizontalen Trennwänden (21-25), die so angeordnet sind, dass sie eine vertikale Abfolge von Abtropfkammern (D1-D3) innerhalb des Gehäuses (10) definieren, wobei jede der Abtropfkammern (D1-D3) dazu ausgelegt ist, Molke aus einer Mischung aus Käsebruch und Molke in der Säule (20) durch mindestens einen perforierten Abschnitt (P1-P3) der Säule (20) aufzunehmen,
und wobei die vertikale Abfolge von Abtropfkammern (D1-D3) eine untere Abtropfkammer (D2; D3) umfasst, die unterhalb einer oberen Abtropfkammer (D1; D2) angeordnet ist, **dadurch gekennzeichnet, dass** das Innenvolumen der unteren Abtropfkammer (D2; D3) kleiner als das Innenvolumen der oberen Abtropfkammer (D1; D2) ist.

## Revendications

1. Appareil d'égouttage et de formation de caillé, ledit appareil comprenant :
un boîtier (10) disposé dans le sens vertical (V),
un module (26) qui est inséré de manière amovible dans le boîtier (10) et comprend une colonne (20) conçue pour s'étendre dans la direction verticale (V),
un agencement de distribution (11) disposé au-dessus du module (26) pour distribuer un mélange de caillé et de lactosérum dans la colonne (20), et
une unité de base (15) disposée sous le module (26) pour recevoir le caillé égoutté provenant de la colonne (20), la colonne (20) comprenant des sections non perforées (B1-B3) et des sections perforées (P1-P3), qui alternent dans la direction verticale (V) de la colonne (20), ledit module (26) comprenant en outre une pluralité de séparateurs horizontaux (21-25), qui sont disposés pour définir une séquence verticale de chambres de drainage (D1-D3) à l'intérieur du boîtier (10), chacune des chambres de drainage (D1-D3) étant conçue pour recevoir le lactosérum provenant du mélange dans la colonne (20) à travers au moins une section perforée (P1-P3) de la colonne (20), et
la séquence verticale de chambres de drainage (D1-D3) comprenant une chambre de drainage inférieure (D2 ; D3), qui est disposée sous une chambre de drainage supérieure (D1 ; D2), **caractérisé en ce que** le volume intérieur de la chambre de drainage inférieure (D2 ; D3) est plus petit que le volume intérieur de la chambre de drainage supérieure (D1 ; D2).

2. Appareil selon la revendication 1, le volume intérieur de la chambre de drainage inférieure (D2 ; D3) étant au moins 25 % plus petit que le volume intérieur de la chambre de drainage supérieure (D1 ; D2).

3. Appareil selon la revendication 1 ou 2,
la chambre de drainage inférieure (D2 ; D3) comprenant une section perforée (P2 ; P3) de la colonne (20), et
la chambre de drainage supérieure (D1 ; D2) comprenant une section non perforée (B2 ; B3) et une autre section perforée (P1 ; P2) de la colonne (20).

4. Appareil selon la revendication 3, dans la chambre de drainage supérieure (D1 ; D2), la section non perforée (B2 ; B3) étant disposée sous l'autre section perforée (P1 ; P2).

5. Appareil selon la revendication 4, la section non perforée (B2 ; B3) dans la chambre de drainage supérieure (D1 ; D2) étant disposée au niveau d'une partie inférieure de la chambre de drainage supérieure (D1 ; D2), à proximité de l'un des séparateurs horizontaux (21-25).

6. Appareil selon l'une quelconque des revendications 3 à 5, une hauteur verticale de la section non perforée (B2 ; B3) dans la chambre de drainage supérieure (D1 ; D2) étant au moins égale à 25 % de la hauteur verticale de l'autre section perforée (P1 ; P2) dans la chambre de drainage supérieure (D1 ; D2).

7. Appareil selon l'une quelconque des revendications 3 à 6, l'autre section perforée (P1 ; P2) dans la chambre de drainage supérieure (D1 ; D2) étant située au sommet de la chambre de drainage supérieure (D1 ; D2), à proximité de l'un des séparateurs horizontaux (21-25).

8. Appareil selon l'une quelconque des revendications 3 à 6, la chambre de drainage supérieure (D1) comprenant une autre section non perforée (B1) de la colonne (20), l'autre section non perforée (B1) dans la chambre de drainage supérieure (D1 ; D2) étant disposée au-dessus de l'autre section perforée (P1) dans la chambre de drainage supérieure (D1).

9. Appareil selon l'une quelconque des revendications 1 à 7, ladite pluralité de séparateurs horizontaux (21-25) définissant une chambre de non-drainage (BC), qui comprend une autre partie non perforée (B1) de la colonne (20) et est disposée au-dessus de la séquence verticale de chambres de drainage (D1-D3).

10. Appareil selon l'une quelconque des revendications précédentes, la chambre de drainage supérieure (D1) étant située au sommet de la séquence verticale de chambres de drainage (D1-D3).

11. Appareil selon l'une quelconque des revendications 1 à 7 ou 9, la chambre de drainage supérieure (D2) étant située entre la chambre de drainage supérieure (D1) et la chambre de drainage inférieure (D3).

12. Appareil selon l'une quelconque des revendications précédentes, la colonne (20) ayant, à l'intérieur de la chambre de drainage supérieure (D1 ; D2), une hauteur totale non perforée dans la direction verticale (V) qui est égale à au moins 25 % d'une hauteur verticale de la chambre de drainage supérieure (D1 ; D2).

13. Appareil selon l'une quelconque des revendications précédentes, la chambre de drainage inférieure (D2 ; D3) étant située au niveau d'une extrémité inférieure de la séquence verticale de chambres de drainage (D1-D3), adjacente à l'unité de base (15).

14. Appareil selon la revendication 13, la colonne (20) ayant, à l'intérieur de la chambre de drainage inférieure (D2 ; D3), une hauteur totale non perforée dans la direction verticale (V) qui est inférieure à 15 % de la hauteur verticale de la chambre de drainage inférieure (D2 ; D3).

15. Appareil selon l'une quelconque des revendications précédentes, comprenant en outre un dispositif de recirculation de lactosérum (301-303) qui est en communication fluidique avec une chambre de drainage respective dans la séquence verticale de chambres de drainage (D1-D3) et permet de faire recirculer le lactosérum d'une sortie (31-33) de la chambre de drainage (D1-D3) respective vers une entrée de recirculation (31'-33') de la chambre de drainage (D1-D3) respective.

16. Appareil selon l'une quelconque des revendications précédentes, la chambre de drainage inférieure (D2 ; D3) ayant une hauteur verticale inférieure à celle de la chambre de drainage supérieure (D1 ; D2).

17. Appareil selon l'une quelconque des revendications précédentes, chacune des sections perforées (P1-P3) s'étendant de manière circonférentielle autour de la colonne (20).

18. Module à installer dans le boîtier (10) de l'appareil selon l'une quelconque des revendications 1 à 17, ledit module comprenant :
une colonne (20), qui est conçue pour s'étendre dans une direction verticale (V) et comprend des sections non perforées (B1-B3) et des sections perforées (P1-P3), qui alternent dans la direction verticale (V) de la colonne (20), et
une pluralité de séparateurs horizontaux (21-25), qui sont disposés de sorte à définir une séquence verticale de chambres de drainage (D1-D3) à l'intérieur du boîtier (10), chacune des chambres de drainage (D1-D3) étant conçue pour recevoir le lactosérum provenant d'un mélange de caillé et de lactosérum dans la colonne (20) à travers au moins une section perforée (P1-P3) de la colonne (20), la séquence verticale de chambres de drainage (D1-D3) comprenant une chambre de drainage inférieure (D2 ; D3), qui est disposée sous une chambre de drainage supérieure (D1 ; D2), **caractérisé en ce que** le volume intérieur de la chambre de drainage inférieure (D2 ; D3) est plus petit que le volume intérieur de la chambre de drainage supérieure (D1 ; D2).
